# EUROPÄISCHE PATENTSCHRIFT

(11) **EP 2 719 663 B1**
(45) Veröffentlichungstag und Bekanntmachung des Hinweises auf die Patenterteilung: **30.03.2016**
(21) Anmeldenummer: 13187018.0
(22) Anmeldetag: 02.10.2013
(51) Int. Cl.: C01B 33/035

(54) **VERFAHREN ZUR ABSCHEIDUNG VON POLYKRISTALLINEM SILIZIUM**
PROCESS FOR DEPOSITION OF POLYCRYSTALLINE SILICON
PROCÉDÉ DE DÉPOSITION DE SILICIUM POLYCRISTALLIN

(30) Priorität: 15.10.2012 DE 102012218747
(43) Veröffentlichungstag der Anmeldung: 16.04.2014
(73) Patentinhaber: Wacker Chemie AG, 81737 München (DE)
(72) Erfinder: Sofin, Dr. Mikhail, 84489 Burghausen (DE)
(74) Vertreter: Potten, Holger

(56) Entgegenhaltungen:
- EP-A1- 1 223 145
- EP-A2- 0 638 923
- WO-A1-2007/145474
- US-A- 5 108 512
- US-A1- 2010 112 744
- DATABASE CA [Online] CHEMICAL ABSTRACTS SERVICE, COLUMBUS, OHIO, US; 11. Juli 2012 (2012-07-11), JIANG, HONGFU ET AL: "Preparation method of polysilicon by adding oxidative gas to reduce atomization and modify surface morphology of product", XP002718495, gefunden im STN Database accession no. 157:265485 & CN 102 557 038 A (JIANGSU ZHONGNENG POLYSILICON TECHNOLOGY DEVELOPMENT CO., LTD., PEOP.) 11. Juli 2012 (2012-07-11)

## Beschreibung

Die Erfindung betrifft ein Verfahren zur Abscheidung von polykristallinem Silicium.
Hochreines polykristallines Silicium (Polysilicium) dient als Ausgangsmaterial zur Herstellung von einkristallinem Silicium für Halbleiter nach dem Czochralski(CZ)- oder Zonenschmelz(FZ)-Verfahren, sowie zur Herstellung von ein- oder multikristallinem Silicium nach verschiedenen Zieh- und Gieß-Verfahren zur Produktion von Solarzellen für die Photovoltaik.
Polysilicium wird üblicherweise mittels des Siemens-Verfahrens hergestellt. Dabei wird ein Reaktionsgas umfassend eine oder mehrere Silicium enthaltende Komponenten und gegebenenfalls Wasserstoff in einen Reaktor umfassend durch direkten Stromdurchgang erhitzte Trägerkörper eingeleitet, wobei sich an den Trägerkörpern Silicium in fester Form abscheidet.
Als Silicium enthaltende Komponenten werden bevorzugt Silan (SiH₄), Monochlorsilan (SiH₃Cl), Dichlorsilan (SiH₂Cl₂), Trichlorsilan (SiHCl₃), Tetrachlorsilan (SiCl₄) oder Mischungen der genannten Stoffe eingesetzt.
Das Siemens-Verfahren wird üblicherweise in einem Abscheidereaktor (auch "Siemens-Reaktor" genannt)durchgeführt. In der gebräuchlichsten Ausführungsform umfasst der Reaktor eine metallische Grundplatte und eine kühlbare Glocke, die auf die Grundplatte gesetzt ist, so dass ein Reaktionsraum im Inneren der Glocke entsteht. Die Grundplatte ist mit einer oder mehreren Gaseinlassöffnungen und einer oder mehreren Abgasöffnungen für die abgehenden Reaktionsgase sowie mit Halterungen versehen, mit deren Hilfe die Trägerkörper im Reaktionsraum gehalten und mit elektrischem Strom versorgt werden. In EP 2 077 252 A2 wird der typische Aufbau eines in der Herstellung von Polysilicium zum Einsatz kommenden Reaktortyps beschrieben.

Jeder Trägerkörper besteht meistens aus zwei dünnen Filamentstäben und einer Brücke, die in der Regel benachbarte Stäbe an ihren freien Enden verbindet. Am häufigsten werden die Filamentstäbe aus ein- oder polykristallinem Silicium gefertigt, seltener kommen Metalle bzw. Legierungen oder Kohlenstoff zum Einsatz. Die Filamentstäbe stecken senkrecht in am Reaktorboden befindlichen Elektroden, über die der Anschluss an die Stromversorgung erfolgt. An den erhitzten Filamentstäben und der waagrechten Brücke scheidet sich hochreines Polysilicium ab, wodurch deren Durchmesser mit der Zeit anwächst. Nachdem der gewünschte Durchmesser erreicht ist, wird der Prozess beendet, indem die Zufuhr von Silicium-haltigen Komponenten beendet wird.

Der Abscheideprozess wird üblicherweise durch die Vorgabe von Stabtemperatur und Reaktionsgasstrom bzw. -Zusammensetzung gesteuert. Die Messung der Stabtemperatur erfolgt mit Strahlungspyrometern meistens an den der Reaktorwand zugewandten Oberflächen der Stäbe. Die Stabtemperatur wird durch Steuerung oder Regelung der elektrischen Leistung entweder fest oder in Abhängigkeit vom Stabdurchmesser vorgegeben. Die Menge und die Zusammensetzung des Reaktionsgases werden in Abhängigkeit von der Zeit oder dem Stabdurchmesser vorgegeben.

Die Abscheidung mit TCS bzw. dessen Mischung mit DCS und/oder STC erfolgt üblicherweise bei Stabtemperaturen zwischen 900 und 1100 °C, einer Zufuhr von siliciumhaltigen Komponente(n) (in Summe) von 0,5 bis 10 kMol/h pro 1 m² der Staboberfläche, wobei der Mol-Anteil dieser Komponente(n) im Zugasstrom (in Summe) zwischen 10% und 50% liegt (der Rest 90% bis 50% ist üblicherweise Wasserstoff).

Die Angaben zu Stabtemperatur hier und an anderen Stellen beziehen sich (falls nicht explizit erwähnt) auf Werte, die im senkrechten Stabbereich mindestens 50 cm oberhalb der Elektrode und mindesten 50 cm unterhalb der Brücke gemessen werden. In anderen Bereichen kann die Temperatur davon deutlich abweichen. So werden z.B. im Brückeninnenbogen signifikant höhere Werte gemessen, da in diesem Bereich der Stromfluss anders verteilt ist.

Die Abscheidung mit Silan wird bei deutlich niedrigeren Temperaturen (400-900°C), Durchflüssen (0,01 bis 0,2 kMol/h Silan pro 1 m² der Staboberfläche) und Konzentrationen (0,5-2% Silan im Wasserstoff) durchgeführt.

Die Morphologie der abgeschiedenen Stäbe kann von kompaktem und glattem (wie z.B. in US 6,350,313 B2 beschrieben) bis zu sehr porösem und zerklüftetem Material (wie beispielweise in US2010/219380 A1 beschrieben) variieren. Die kompakten Stäbe sind teurer in der Produktion, weil der Prozess langsamer läuft und der spezifische Energiebedarf höher ist.

Die Steigerung der oben beschriebenen Grundparameter (Temperatur der Stäbe, spezifischer Durchfluss, Konzentration) führt im Allgemeinen zur Erhöhung der Abscheidegeschwindigkeit und damit zur Verbesserung der Wirtschaftlichkeit des Abscheideprozesses.

Jedem dieser Parameter sind allerdings natürliche Grenzen gesetzt, bei deren Überschreitung der Herstellprozess gestört wird (je nach Konfiguration des eingesetzten Reaktors liegen die Grenzen etwas unterschiedlich).

Wird z.B. die Konzentration der Silicium-haltigen Komponente(n) zu hoch gewählt, steigt die homogene Gasphasenabscheidung auf ein unerträgliches Maß und der Abscheideprozess wird gestört.

Generell befinden sich bei der Abscheidung von Poly-Si nach dem Siemens-Verfahren zwei konkurrierende Prozesse, Silicium-Ablagerung an der Oberfläche der Stäbe (CVD-Prozess) und Bildung von freien Partikeln (Gasphasenreaktion bzw. Staubabscheidung) im Gleichgewicht.

Die Art der gebildeten Partikel unterscheidet sich je nach den Bedingungen des Abscheideprozesses, Konfiguration des Abscheidereaktors und Ort des Entstehens, wobei deren Zusammensetzung sich von reinem Si (amorph bis kristallin) bis zu komplexen siliciumhaltigen Verbindungen allgemeiner Formel SiₓCl_{y}H_{z} variieren kann.

Die Staubpartikel verteilen sich mit der Gasströmung über den gesamten Reaktorraum und setzten sich auf den Stäben sowie der inneren Reaktorwand (in Form von Glockenbelag) ab. Während sich die an den Stäben abgesetzten Partikel bei der weiterlaufenden Abscheidung mit den neu bildenden Schichten überwachsen und so in das Material integriert werden (SiₓCl_{y}H_{z} reagieren an den heißen Stäben in der Regel ab und wandeln sich in reines Si um), bleiben die an der kalten Glockenwand abgesetzten Feststoffteilchen in mehr oder weniger ursprünglicher Form dort bis zum Ende des Abscheidzyklus hängen, so dass der Glockenbelag mit dem fortschreitenden Abscheideprozess immer stärker wird.

Das macht eine Reinigung der Innenwand der Abscheidereaktoren notwendig, bei der der Glockenbelag entfernt wird.

Normalerweise wird sie nach dem Ausbau der dick abgeschiedenen Stäbe durchgeführt, aber noch bevor der Reaktor mit den dünnen Filamentstäben der nächsten Charge bestückt wird.

In US5108512 A ist ein Verfahren zur Reaktorreinigung beschrieben, bei dem man auf die Siliciumablagerungen auf den inneren Oberflächen des Reaktors Kohlendioxid-Pellets aufprallen lässt, um die Siliciumablagerungen zu entfernen.

Durch eine starke Anhebung des H₂-Anteils im Feed-Gas während der Abscheidung ist es prinzipiell möglich, das Gleichgewicht der ablaufenden chemischen Reaktionen weitgehend auf die Seite des CVD-Prozesses zu verlagern. Aus wirtschaftlichen Gründen ist dies aber nicht bevorzugt, weil bei diesen Bedingungen die Abscheidung deutlich langsamer läuft und der Energiebedarf höher ist. Dadurch bedingt wird die Gasphasenreaktion bei der kommerziellen Produktion von Polysilicium bis zu einem bestimmten Maß toleriert.

So werden beim Siemens-Verfahren industriell hergestellte polykristalline Silicium-Stäbe mehr oder weniger stark immer mit losen siliciumhaltigen Partikeln bzw. Siliciumstaub kontaminiert. Ein Teil kommt auf die Stäbe aus der Gasphase unmittelbar nach dem Ende des Abscheideprozesses. Wenn die Abscheidung beendet ist, werden die zuletzt gekommenen Partikeln nicht mehr durch das Überwachsen mit neuen Schichten in die Stäbe integriert und bleiben somit lose auf der Oberfläche. Der zweite Teil kommt unvermeidlich auf die Stäbe von der Reaktorwand, zum Teil mit Spülgas übertragen, zum Teil durch Abrieseln aufgrund Erschütterungen und Bewegungen des Reaktors beim Ausbau.

Selbst eine kleine Menge von Staubpartikeln hat einen starken negativen Einfluss auf Produkteigenschaften.

Aus US6916657 ist bekannt, dass Fremdpartikel die Ausbeute beim Kristallziehen reduzieren können.

Im Stand der Technik wird versucht, den Grad der Gasphasenreaktion durch das Einbringen von Kühlelementen in den Reaktorraum zu reduzieren (z.B. DE 195 02 865 A1). Neben der sehr begrenzten Wirkung bedeutet dieser Ansatz allerdings einen erheblichen zusätzlichen Konstruktiven Aufwand und im Allgemeinen eine Steigerung der Energiebedarfes, da die Energie aus dem Reaktor durch die Kühlelemente entzogen wird.

Außerdem sind im Stand der Technik mehrere Methoden bekannt, wie man auf kleine Stücke gebrochenes polykristallines Si von Staub befreit. Um Siliciumbruch für CZ oder Solar zu erzeugen, werden die Stäbe mit Werkzeugen wie Hämmern, Brechern oder Mühlen mechanisch zerkleinert und anschließend nach Größe klassiert. Die Größe der Siliciumstücke reicht dabei von etwa 1 mm bis zu Stücken von 150 mm und mehr. Die Form der Stücke sollte üblicherweise nicht zu stark von der Kugelform abweichen.

In WO 2009/003688 A2 wird z.B. ein Verfahren zur Aufbereitung von in einem Materialgemisch vorhandenem, oberflächenverunreinigten Silicium-Material durch Absieben des an der Oberfläche anhaftenden Materials, Separieren von elektrisch leitenden Grobpartikeln aus dem Materialgemisch und Entfernen von visuell erkennbarem Fremdmaterial und stark oxidiertem Siliciummaterial aus dem Materialgemisch beschrieben. Dadurch kann allerdings nur eine Abtrennung von losen und größeren Partikel erreicht werden.

In DE102010039751A1 wird eine Entstaubung von Polysilicium mittels Druckluft oder Trockeneis vorgeschlagen. Neben dem beträchtlichen technischen Aufwand hat dieses Verfahren den Nachteil, das bei porösem und zerklüftetem Material nicht alle Partikel entfernt werden können.

Außerdem sind mehrere nasschemische Reinigungsverfahren bekannt, die in der Regel mit einer oder mehreren Säuren oder Säuregemischen erfolgen (siehe z.B. US 6,309,467 B1). Diese Art der Reinigung, welche normalerweise sehr aufwändig und teuer ist, kann bei Material mit poröser und zerklüfteter Morphologie vorhandene Partikel ebenfalls nicht vollständig entfernen.

Im Bereich der Wirbelschichtabscheidung ist aus WO 2007/145474 A1 ein Verfahren zur Herstellung von granularem Polysilicium bekannt, bei dem Siliciumablagerungen durch Zufuhr eines Ätzgases in die Reaktionszone, das mit der Siliciumablagerung zur Bildung von gasförmigen Siliciumgemischen reagiert, entfernt werden. Als Ätzgase werden SiCl₄, HCl oder Cl₂ vorgeschlagen, ggf. weiterhin umfassend Wasserstoff, Stickstoff, Argon oder Helium.

Die Aufgabe der vorliegenden Erfindung bestand darin, ein neues kostengünstiges Verfahren zur Herstellung von polykristallinem Silicium zu finden, welches Reaktor und polykristalline Silicium-Stäbe von bei der Abscheidung entstandenen losen Partikeln bzw. Staub und Glockenbelag befreit.

Die Aufgabe der Erfindung wird gelöst durch ein Verfahren zur Abscheidung von polykristallinem Silicium, umfassend Einleiten eines Reaktionsgases enthaltend eine Silicium enthaltende Komponente und Wasserstoff in einen Reaktor, wodurch polykristalline Siliciumstäbe erzeugtwerden, dadurch gekennzeichnet, dass nach Beendigung der Abscheidung ein Silicium oder siliciumhaltige Verbindungen der allgemeinen Formel SiₓCl_{y}H_{z} angreifendes Gas in den Reaktor geleitet wird, das die polykristallinen Siliciumstäbe und eine Reaktorinnenwand umströmt, um bei der Abscheidung gebildete, an der Reaktorinnenwand oder an den polykristallinen Siliciumstäben anhaftende siliciumhaltige Partikel aufzulösen, bevor die polykristallinen Siliciumstäbe aus dem Reaktor entnommen werden, wobei als Silicium oder siliciumhaltige Verbindungen der allgemeinen Formel SiₓCl_{y}H_{z} angreifendes Gas ein Gemisch aus H₂ und Trichlorsilan oder ein Gemisch aus H₂ und Trichlorsilan und Dichlorsilan eingesetzt wird, wobei sich das Gemisch aus 90-99 Mol.-% H₂ 1-10 Mol.-% TCS und 0-2 Mol.-% DCS zusammensetzt, der partielle Durchfluss der Chlorsilane in Summe 0,005- 0,2 kMol/h pro 1 m² einer Oberfläche der polykristallinen Siliciumstäbe und die Temperatur der polykristallinen Siliciumstäbe 1100-1400°C betragen.

Vorzugsweise wird nach dem Einleiten des Silicium oder siliciumhaltige Verbindungen angreifenden Gases eine Spülung des Reaktors mit Wasserstoff oder mit einem Inertgas (z.B. Stickstoff oder Argon) durchgeführt, um den Reaktor von gasförmigen Reaktionsprodukten und nichtumgesetzten Resten der Silicium enthaltenden Komponente frei zu spülen. Nach der Spülung wird der Zufluss des Spülgases beendet und die Energiezufuhr wird abrupt oder mit einer bestimmten Rampe auf Null reduziert, so dass sich die entstandenen Si-Stäbe auf die Umgebungstemperatur abkühlen.

Es ist auch vorteilhaft, eine ähnliche Spülung vor dem Einleiten des Silicium oder siliciumhaltige Verbindungen angreifenden Gases durchzuführen.

Die Erfindung sieht also vor, störende Partikel und Glockenbelag nach dem Ende des Abscheideprozesses in einem nachgeschalteten Schritt gaschemisch zu entfernen.

Die Erfindung ermöglicht es, wirtschaftlich günstigere Abscheideprozesse mit einem höheren Anteil an der Gasphasenreaktion zu fahren und gleichzeitig hochwertige, staub- und partikelfreie polykristalline Stäbe zu bekommen, die bei nachfolgenden Kristallisationsschritten hohe Ausbeuten erreichbar machen.

Überraschenderweise wurde gefunden, dass gemessene Oberflächenmetallkonzentrationen bei derart behandelten Chargen deutlich niedriger waren. Möglicherweise werden dabei auch Metalle (bzw. deren Verbindungen) chemisch angegriffen, in die flüchtigen Chloride überführt und so entfernt. Eine deutliche Verringerung wurde bei Fe, Ni, Cr, Ti, Mo, Mn, Co, V, Cu, Zn, Zr, Nb, Ta, W gefunden.

Nachdem die Stäbe während der Abscheidung den gewünschten Durchmesser erreicht haben, wird durch den Reaktor ein Gas oder Gasgemisch geleitet, welches Silicium-Staubpartikel und Glockenbelag chemisch angreift und auflöst. Durch Einstellung der Stabtemperatur lassen sich Reinigungswirkung und - geschwindigkeit gezielt steuern.

Beim erfindungsgemäßen Verfahren werden die abgeschiedenen Siliciumstäbe nicht oder nur sehr wenig angegriffen.

Bei geeigneter Wahl der Prozessparameter kann neben der ätzenden Wirkung gegenüber Glockenbelag und losen Silicium-Partikeln gleichzeitig eine geringfügige zusätzliche Ablagerung von Silicium an den Siliciumstäben erfolgen.

Ein weiterer Vorteil ist die Möglichkeit, für die Reinigung das gleiche Chlorsilan, nämlich Trichlorsilan, oder das gleiche Gemisch von Chlorsilanen (Trichlorsilan und Dichlorsilan) zu verwenden, welches für die Abscheidung eingesetzt wird.

So braucht man keine weiteren Leitungen zu den Reaktoren zu legen, um sie mit dem Medium für die Reinigung zu versorgen. Die Dauer des Vorgangs orientiert sich am Verunreinigungsgrad der Stäbe und Glocke.

In der Praxis haben sich Zeiten zwischen 30 und 600 Minuten als optimal herausgestellt.

### Beispiele

Die Vorteile der Erfindung sollen nachfolgend anhand eines Vergleichsbeispiels und anhand eines Beispiels erläutert werden.

Dabei wurden polykristalline Siliciumstäbe (Durchmesser 160 mm) jeweils in dem gleichen Abscheidereaktor mit dem gleichen Abscheideprozess hergestellt, der sich durch eine hohe Abscheidegeschwindigkeit und Wirtschaftlichkeit auszeichnet, jedoch auch einen Anteil an Gasphasenreaktion aufweist, so dass ein starker Glockenbelag gebildet wird und die Stäbe mit losen Partikeln kontaminiert werden:

Die Abscheidung wurde mit TCS und H₂ bei der über die gesamte Abscheidezeit konstanten Stabtemperatur von 1050°C durchgeführt. Der Mol-Anteil von TCS lag bei 30%. Dessen Zufuhr wurde in Abhängigkeit vom Stab-Durchmesser so geregelt, dass der spezifische Durchfluss bei 3 kMol/h pro 1 m² der Staboberfläche betrug.

Zur Messung des entstandenen Glockenbelags wurde der Reflexionsgrad der inneren Glockenwand vor und nach der Abscheidung bei 900 nm mit einem Photometer gemessen.

Zur Bewertung der Qualität der Stäbe wurden sie nach der Abscheidung zerkleinert und abschließend in einem CZ-Kristallziehprozess eingesetzt.

Zur Beurteilung der Ziehperformance wurde jeweils bestimmt, welcher Gewichtsanteil des polykristallinen Siliciums in einen versetzungsfreien Einkristall überführt werden konnte (Ziehausbeute).
Eine hohe Ziehausbeute weist auf eine niedrige Kontamination und eine hohe Qualität der Stäbe hin.

Bei allen Versuchen wurden Silicium-Einkristalle in folgendem CZ-Ziehprozess gezogen: Tiegeleinwaage 90 kg,
Kristalldurchmesser 8 Zoll, Kristallorientierung <100>, Ziehgeschwindigkeit 1 mm/h.

### Vergleichsbeispiel

Im Vergleichsbeispiel wurden die Stäbe nach der Abscheidung keiner Behandlung unterworfen. Der Reaktor wurde entsprechend dem Stand der Technik frei gespült. Anschließend wurden die abgeschiednen Stäbe auf Raumtemperatur abgekühlt und ausgebaut.

Die Vermessung der Reflexion der Reaktorwand nach dem Prozessende zeigte eine Reduktion um 50% gegenüber der Reflexion einer sauberen Glocke vor Prozessbeginn.

Beim Ziehen von Einkristallen aus dem gewonnenen polykristallinen Material ergab sich eine Ziehausbeute im Mittel von nur 67,3%.

### Beispiel

Im Beispiel wurden nach Abscheidung und Freispülen des Reaktors die Stäbe und der Reaktor einem erfindungsgemäßen Reinigungsschritt gemäß dem erfindungsgemäßen Verfahren unterworfen.

Dabei wurde durch den Reaktor ein Gasgemisch aus TCS (5 Mol.-%) und H₂ 300 Minuten lang geleitet, wobei der partielle Durchfluss des Chlorsilans 0,05 kMol/h pro 1 m² der Oberfläche der Siliciumstäbe betrug und die Temperatur der Stäbe bei 1200 °C lag.

Die Vermessung der Reflexion der Reaktorwand nach diesem Schritt zeigte eine geringe Verringerung auf 95%, verglichen mit der Reflexion einer sauberen Glocke vor dem Beginn der Abscheidung.

Beim Ziehen von Einkristallen aus dem gewonnenen polykristallinen Material ergab sich eine Ziehausbeute im Mittel von 91,8%.

## Patentansprüche

1. Verfahren zur Abscheidung von polykristallinem Silicium, umfassend Einleiten eines Reaktionsgases enthaltend eine Silicium enthaltende Komponente und Wasserstoff in einen Reaktor, wodurch polykristalline Siliciumstäbe erzeugt werden **dadurch gekennzeichnet, dass** nach Beendigung der Abscheidung ein Silicium oder siliciumhaltige Verbindungen der allgemeinen Formel SiₓCl_{y}H_{z} angreifendes Gas in den Reaktor geleitet wird, das die polykristallinen Siliciumstäbe und eine Reaktorinnenwand umströmt, um bei der Abscheidung gebildete, an der Reaktorinnenwand oder an den polykristallinen Siliciumstäben anhaftende siliciumhaltige Partikel aufzulösen, bevor die polykristallinen Siliciumstäbe aus dem Reaktor entnommen werden, wobei als Silicium oder siliciumhaltige Verbindungen der allgemeinen Formel SiₓCl_{y}H_{z} angreifendes Gas ein Gemisch aus H₂ und Trichlorsilan oder ein Gemisch aus H₂ und Trichlorsilan und Dichlorsilan eingesetzt wird, wobei sich das Gemisch aus 90-99 Mol.-% H₂ 1-10 Mol.-% TCS und 0-2 Mol.-% DCS zusammensetzt, der partielle Durchfluss der Chlorsilane in Summe 0,005- 0,2 kMol/h pro 1 m² einer Oberfläche der polykristallinen Siliciumstäbe und die Temperatur der polykristallinen Siliciumstäbe 1100-1400°C betragen.

2. Verfahren nach Anspruch 1, wobei nach dem Einleiten des Silicium oder siliciumhaltige Verbindungen der allgemeinen Formel SiₓCl_{y}H_{z} angreifenden Gases eine Spülung des Reaktors mit Wasserstoff oder mit einem Inertgas erfolgt, um den Reaktor von gasförmigen Reaktionsprodukten und nichtumgesetzten Resten der Silicium enthaltenden Komponente frei zu spülen.

3. Verfahren nach Anspruch 2, wobei auch vor dem Einleiten des Silicium oder siliciumhaltige Verbindungen der allgemeinen Formel SiₓCl_{y}H_{z} angreifenden Gases eine Spülung des Reaktors mit Wasserstoff oder mit einem Inertgas erfolgt.

## Claims

1. Process for deposition of polycrystalline silicon, comprising introduction of a reaction gas containing a silicon-containing component and hydrogen into a reactor, as a result of which polycrystalline silicon rods are produced, **characterized in that**, after the deposition has ended, a gas which attacks silicon or silicon compounds of the general formula SiₓCl_{y}H_{z} is passed into the reactor and flows around the polycrystalline silicon rods and an inner reactor wall in order to dissolve silicon-containing particles which are formed in the course of deposition and adhere on the inner reactor wall or on the polycrystalline silicon rods before the polycrystalline silicon rods are removed from the reactor, wherein a mixture of H₂ and trichlorosilane or a mixture of H₂ and trichlorosilane and dichlorosilane is used as the gas which attacks silicon or silicon compounds of the general formula SiₓCl_{y}H_{z}, the mixture being composed of 90-99 mol% of H₂, 1-10 mol% of TCS and 0-2 mol% of DCS, the partial flow rate of the chlorosilanes totaling 0.005-0.2 kmol/h per 1 m² of a surface area of the polycrystalline silicon rods and the temperature of the polycrystalline silicon rods being 1100-1400°C.

2. Process according to Claim 1, wherein the introduction of the gas which attacks silicon or silicon compounds of the general formula SiₓCl_{y}H_{z} is followed by purging of the reactor with hydrogen or with an inert gas in order to purge the reactor to free it of gaseous reaction products and unconverted residues of the silicon-containing component.

3. Process according to Claim 2, wherein the introduction of the gas which attacks silicon or silicon compounds SiₓCl_{y}H_{z} is also preceded by purging of the reactor with hydrogen or with an inert gas.

## Revendications

1. Procédé pour le dépôt de silicium polycristallin, comprenant l'introduction dans un réacteur d'un gaz de réaction contenant de l'hydrogène et un composant contenant du silicium, par lequel sont produites des barres de silicium polycristallin, **caractérisé en ce qu'**une fois terminé le dépôt on fait passer dans le réacteur un gaz attaquant le silicium ou les composés contenant du silicium de formule générale SiₓCl_{y}H_{z}, qui circule en entourant les barres de silicium polycristallin et une paroi interne du réacteur, afin de détacher des particules contenant du silicium, formées lors du dépôt, qui adhèrent aux barres de silicium polycristallin ou à la paroi interne du réacteur, avant que les barres de silicium polycristallin soient retirées du réacteur, en utilisant comme gaz attaquant le silicium ou les composés contenant du silicium de formule générale SiₓCl_{y}H_{z} un mélange de H₂ et trichlorosilane ou un mélange de H₂ et trichlorosilane et dichlorosilane, le mélange étant composé de 90-99 % en moles de H₂, 1-10 % en moles de TCS et 0-2 % en moles de DCS, le débit partiel des chlorosilanes valant au total 0,005 - 0,2 kmoles/h pour 1 m² d'une surface des barres de silicium polycristallin et la température des barres de silicium polycristallin étant de 1 100 - 1 400 °C.

2. Procédé selon la revendication 1, dans lequel après l'introduction du gaz attaquant le silicium ou les composés contenant du silicium de formule générale SiₓCl_{y}H_{z} on effectue un rinçage du réacteur avec de l'hydrogène ou avec un gaz inerte, afin de rincer le réacteur pour en éliminer les produits de réaction gazeux et les restes n'ayant pas réagi du composant contenant du silicium.

3. Procédé selon la revendication 2, dans lequel on effectue un rinçage du réacteur avec de l'hydrogène ou avec un gaz inerte également avant l'introduction du gaz attaquant le silicium ou les composés contenant du silicium de formule générale SiₓCl_{y}H_{z}.
